# EUROPÄISCHE PATENTANMELDUNG

(11) **EP 3 663 061 A1**
(43) Veröffentlichungstag der Anmeldung: **10.06.2020**
(21) Anmeldenummer: 18210385.3
(22) Anmeldetag: 05.12.2018
(51) Int. Cl.: B28D 1/04, G08C 17/00, B23Q 11/00, B23Q 11/10, B23D 59/00, B28D 7/00, B28D 7/02

(54) **VERFAHREN ZUM BETREIBEN EINES SYSTEMS UND SYSTEM**

(71) Anmelder: Hilti Aktiengesellschaft, 9494 Schaan (LI)
(72) Erfinder: Balter, Marco, 6800 Feldkirch (AT); Sattler, Christian, 87640 Biessenhofen (DE); Schaefer, Martin, 6858 Schwarzach (AT)
(74) Vertreter: Hilti Aktiengesellschaft Corporate Intellectual Property

(57) **Zusammenfassung**

Es wird ein Verfahren zum Betreiben eines mehrere Geräte (5, 10, 25, 35) umfassenden Systems (1) beschrieben, wobei das Verfahren folgende Schritte umfasst:
- Übermittlung eines ersten, wenigstens einen Parameter eines Geräts (5, 10, 25, 35) des Systems (1) repräsentierenden Signals mittels einer Sende- und Empfangseinrichtung (3, 13, 28, 38) von einem Gerät (5, 10, 25, 35) an die Steuereinrichtung (9);
- Übermittlung eines zweiten, wenigstens einen Parameter eines weiteren Geräts (5, 10, 25, 35) des Systems (1) repräsentierenden Signals mittels der Sende- und Empfangseinrichtung (3, 13, 28, 38) von dem weiteren Gerät (5, 10, 25, 35) an die Steuereinrichtung (9);
- Zusammenführung der Parameter in einem Parametersatz in der Steuereinrichtung (9);
- Auswerten des aktuell vorliegenden Parametersatzes mittels in der Steuereinrichtung (9) hinterlegten Parametersätzen und/oder
- Auswerten des aktuell vorliegenden Parametersatzes mittels wenigstens eines in der Steuereinrichtung (9) hinterlegten Algorithmus; und
- Einstellen wenigstens eines Parameters wenigstens eines Geräts (5, 10, 25, 35) des Systems (1) in Abhängigkeit der Auswertung des aktuell vorliegenden Parametersatzes.

Es wird weiterhin ein System (1) zur Durchführung eines derartigen Verfahrens beschrieben.

## Beschreibung

Die vorliegende Erfindung betrifft ein Verfahren zum Betreiben eines mehrere Geräte umfassenden Systems, wobei ein Gerät eine Hauptwerkzeugmaschine und wenigstens ein weiteres Gerät ein Hilfsgerät ist, gemäß Patentanspruch 1. Weiterhin betrifft die Erfindung ein System zur Durchführung eines derartigen Verfahrens gemäß Patentanspruch 8.

Aus der Praxis sind Kernbohrmaschinen bekannt, welche in Kombination mit einem beispielsweise als Bohrkrone ausgeführten Bohrwerkzeug zur Herstellung von Bohrungen in beispielsweise mineralischen Materialien, wie z. B. Beton, Ziegelwerk oder dergleichen ausgebildet sind. Zur Unterstützung eines Kernbohrvorgangs können mehrere Hilfsgeräte vorgesehen sein. Beispielsweise kann ein Maschinenständer zur Halterung der Kernbohrmaschine, eine Vorschubeinrichtung zur Verlagerung der Kernbohrmaschine entlang des Maschinenständers, eine Wassermanagementeinrichtung zur Sicherstellung einer Wasserversorgung während eines Bohrvorgangs und eine Unterdruckpumpe zur Erzeugung eines Unterdrucks, mittels welchem der Maschinenständer an einem Untergrund festlegbar ist, zum Einsatz kommen. Die Hauptwerkzeugmaschine, hier die Kernbohrmaschine, und die Hilfsgeräte sind jeweils Geräte in einem System. Diese Geräte sind durch verschiedene Parameter gekennzeichnet. Von den einzelnen Geräten des Systems werden beispielsweise jeweils Betriebsparameter ermittelt.

Es ist Aufgabe der vorliegenden Erfindung, ein Verfahren zum Betreiben eines mehrere Geräte umfassenden Systems und ein System zur Durchführung eines derartigen Verfahrens bereitzustellen, wobei eine Performance des Systems verbessert ist.

Die Aufgabe wird mit einem Verfahren zum Betreiben eines mehrere Geräte umfassenden Systems, wobei ein Gerät eine Hauptwerkzeugmaschine und wenigstens ein weiteres Gerät ein Hilfsgerät ist und die Hauptwerkzeugmaschine und das wenigstens eine Hilfsgerät jeweils mit einer Sende- und Empfangseinrichtung und wenigstens einem Sensor ausgeführt sind, und wobei eine Steuereinrichtung vorgesehen ist, dadurch gelöst, dass das Verfahren folgende Schritte umfasst:
- Übermittlung eines ersten, wenigstens einen Parameter eines Geräts des Systems repräsentierenden Signals mittels der Sende- und Empfangseinrichtung von einem Gerät an die Steuereinrichtung;
- Übermittlung eines zweiten, wenigstens einen Parameter eines weiteren Geräts des Systems repräsentierenden Signals mittels der Sende- und Empfangseinrichtung von dem weiteren Gerät an die Steuereinrichtung;
- Zusammenführung der Parameter in einem Parametersatz in der Steuereinrichtung;
- Auswerten des aktuell vorliegenden Parametersatzes mit in der Steuereinrichtung hinterlegten Parametersätzen und/oder
- Auswerten des aktuell vorliegenden Parametersatzes mittels eines in der Steuereinrichtung hinterlegten Algorithmus; und
- Einstellen wenigstens eines Parameters wenigstens eines Geräts des Systems in Abhängigkeit der Auswertung des aktuell vorliegenden Parametersatzes.

Ein Verfahren nach der Erfindung hat den Vorteil, dass ein mit dem Verfahren betriebenes System eine verbesserte Performance und eine verbesserte Benutzerfreundlichkeit aufweist und ein verbessertes Zusammenspiel der Geräte des Systems erzielbar ist. Hierdurch ist eine Erhöhung einer Lebenszeit der einzelnen Geräte erzielbar und eine Leerlaufzeit, eine Ausfallzeit und eine unproduktive Zeit reduzierbar. Das verbesserte Zusammenwirken der Geräte des Systems wird dadurch einreicht, dass einzelne oder alle Geräte des Systems in Abhängigkeit von Parametern eines Geräts oder aller Geräte angesteuert bzw. betrieben werden. Insbesondere kann mit dem Verfahren nach der Erfindung ein Gerät des Systems in Abhängigkeit eines Parameters eines anderen Systems betrieben werden.

Bei einer vorteilhaften Ausführungsform eines Verfahrens nach der Erfindung ist vorgesehen, dass wenigstens ein weiterer, wenigstens einen Parameter wenigstens eines zusätzlichen Geräts des Systems repräsentierenden Signals von dem zusätzlichen Gerät an die Steuereinrichtung übermittelt wird. Vorzugsweise übermitteln sämtliche Geräte Signale an die Steuereinrichtung, die jeweils Parameter des jeweiligen Geräts repräsentieren. Auf diese Weise ist eine Performance des Systems weiter erhöhbar.

Die durch Signale übermittelten Parameter des jeweiligen Geräts können durch Sensoren ermittelt werden, wobei es sich bei den Parametern beispielsweise um das jeweilige Gerät charakterisierende bzw. kennzeichnende Arbeits- bzw. Betriebsparameter oder um Parameter handeln kann, die Umgebungsbedingungen, wie eine Temperatur, betreffen. Weiterhin kann ein Parameter einen Aktivierung- bzw. Deaktivierungszustand eines Geräts charakterisieren.

Alternativ oder zusätzlich hierzu können die durch die Signale übermittelten Parameter des jeweiligen Geräts manuell vorgebbar sein. Hierzu kann beispielsweise eine Benutzerschnittstelle an einem Gerät angeordnet sein, über die der jeweilige Parameter einstellbar ist. Hierbei kann es sich beispielsweise um eine Größe, insbesondere einen Durchmesser, einer Bohrkrone einer Kernbohrmaschine handeln.

Bei einer vorteilhaften Ausführungsform eines Verfahrens nach der Erfindung führt ein von einem Gerät an die Steuereinrichtung übermitteltes Signal zur Einstellung eines Parameters wenigstens eines anderen Geräts. Alternativ oder zusätzlich hierzu kann ein von einem Gerät an die Steuereinrichtung übermitteltes Signal zur Einstellung eines Parameters dieses Geräts führen. In allen Fällen ist eine gewünscht gute Performance des Systems erzielbar.

Um auf einfache Weise eine Infrastruktur zur Verfügung zu stellen, mittels der von der Steuereinrichtung bzw. Steuer- und Regeleinrichtung Parameter insbesondere an allen Geräten des Systems einstellbar ist, kann es vorgesehen sein, dass das die Steuereinrichtung aufweisende Gerät des Systems als Master in einem die Hauptwerkzeugmaschine und das wenigstens eine Hilfsgerät umfassenden Netzwerks und die weiteren Geräte als Slave in dem Netzwerk ausgewählt werden.

Wenn wenigstens ein an die Steuereinrichtung übermitteltes Signal in einer Speichereinrichtung gespeichert wird, können die Signale auf einfache Weise insbesondere nachträglich ausgewertet werden.

Es wird weiterhin ein System zur Durchführung eines derartigen Verfahrens mit mehreren Geräten vorgeschlagen, wobei ein Gerät eine Hauptwerkzeugmaschine und wenigstens ein weiteres Gerät ein Hilfsgerät ist und die Hauptwerkzeugmaschine und das wenigstens eine Hilfsgerät jeweils mit einer Sende- und Empfangseinrichtung und wenigstens einem Sensor ausgeführt sind, und wobei eine Steuereinrichtung vorgesehen ist.

Ein erfindungsgemäß ausgeführtes System weist durch ein verbessertes Zusammenwirken der Geräte des Systems eine verbesserte Performance auf. Hierdurch ist eine Erhöhung einer Lebenszeit der einzelnen Geräte erzielbar und eine Leerlaufzeit, eine Ausfallzeit und eine unproduktive Zeit reduzierbar. Das verbesserte Zusammenwirken der Geräte des Systems ist dadurch erzielt, dass einzelne oder alle Geräte des Systems in Abhängigkeit von Parametern eines Geräts oder aller Geräte angesteuert bzw. betrieben werden. Insbesondere kann ein Gerät des Systems in Abhängigkeit eines Parameters eines anderen Systems betrieben werden.

Es kann sowohl vorgesehen sein, dass die Hauptwerkzeugmaschine die Steuereinrichtung aufweist als auch, dass ein Hilfsgerät die Steuereinrichtung aufweist.

Um eine Kommunikation zwischen den Geräten des Systems besonders einfach und flexibel durchführen zu können, sind die Sende- und Empfangseinrichtungen der Hauptwerkzeugmaschine und des wenigstens einen Hilfsgeräts bei einer vorteilhaften Ausführung der Erfindung Teil einer drahtlosen oder drahtgebundenen Übertragungseinrichtung.

Bei einer vorteilhaften Ausführung der Erfindung ist die drahtlose Übertragungseinrichtung eine optische Übertragungseinrichtung oder eine Funkübertragungseinrichtung. Die Übertragungseinrichtung kann dabei auf verschiedenen Funktionsprinzipien und/oder Standards basieren. Die Funktionsweise der Übertragungseinrichtung kann auf einer Signalübertragung im Radiofrequenzbereich beispielsweise mittels Ultrakurzwelle, Kurzwelle oder Mittelwelle oder auf einer Signalübertragung im infraroten oder optischen Frequenzbereich basieren. Insbesondere ist die Übertragungseinrichtung als RFID-Übertragungseinrichtung, als Bluetooth-Übertragungseinrichtung, als Bluetooth Low Energy (BLE)-Übertragungseinrichtung, als NFC-Übertragungseinrichtung, als WiFi-Übertragungseinrichtung, als QR-Übertragungseinrichtung oder als DMC-Übertragungseinrichtung ausgeführt. Weiterhin kann die Übertragungseinrichtung als WLAN-Übertragungseinrichtung, als ZigBee-Übertragungseinrichtung, als Wibree-Übertragungseinrichtung, WiMAX-Übertragungseinrichtung, als LoRa-Übertragungseinrichtung, als IrDA-Übertragungseinrichtung oder als nach optischem Richtfunk arbeitende Übertragungseinrichtung ausgeführt sein.

Die Hauptwerkzeugmaschine ist bei einer vorteilhaften Ausführung der Erfindung eine Kernbohrwerkzeugmaschine oder eine Wandsägemaschine, wobei ein Hilfsgerät eine Vorschubeinrichtung für die Hauptwerkzeugmaschine, eine Unterdruckpumpe, eine Saugeinrichtung und/oder eine Wassermanagementeinrichtung sein kann.

Bei den von einem Signal repräsentierbaren Parameter kann es sich beispielsweise um einen Aktivierungszustand eines Geräts des Systems, eine Drehzahl, ein Drehmoment oder einen aktuellen Gang einer Getriebeeinrichtung der Hauptwerkzeugmaschine, einen insbesondere automatisiert ermittelten Durchmesser einer Bohrkrone der Hauptwerkzeugmaschine, eine durch die Vorschubeinrichtung erzielte Anpresskraft der Hauptwerkzeugmaschine, eine Vorschubgeschwindigkeit der Vorschubeinrichtung, einen von der Wassermanagementeinrichtung zu der Hauptwerkzeugmaschine geführten Wasservolumenstrom, einen Füllstand eines Wassertanks der Wassermanagementeinrichtung, eine Saugleistung einer Saugeinrichtung, einen durch die Saugeinrichtung erzielbaren Unterdruck oder einen Füllstand der Saugeinrichtung handeln. Die Saugeinrichtung ist insbesondere zur Absaugung von während eines Bearbeitungsvorgangs im Bereich der Hauptwerkzeugmaschine entstehendem Bearbeitungsmaterial vorgesehen.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine vereinfachte Darstellung eines eine Kernbohrmaschine, einen Bohrständer, eine Vorschubeinrichtung, eine Wassermanagementeinrichtung und eine Saugeinrichtung aufweisenden Systems; und
- Fig. 2: eine vereinfachte Darstellung eines Ablaufdiagramms einer Ausführungsform eines erfindungsgemäßen Verfahrens zum Betreiben des Systems gemäß Fig. 1.

### Ausführungsbeispiel:

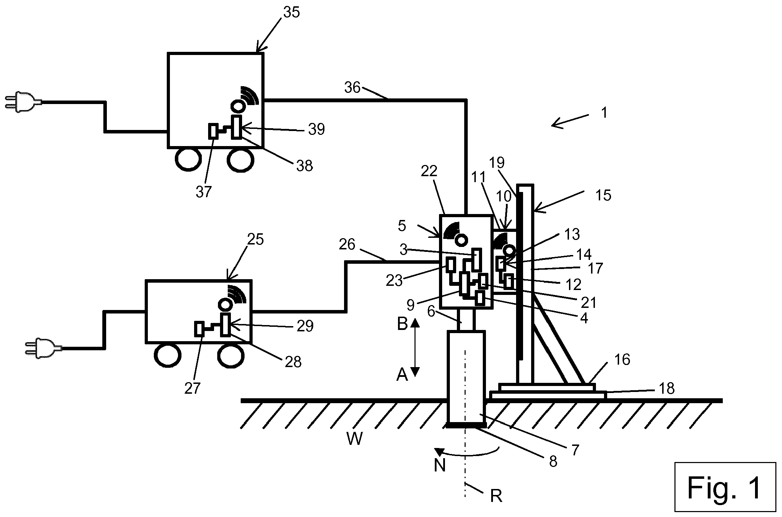

Fig. 1 zeigt ein erfindungsgemäß ausgeführtes System 1 umfassend eine als Kernbohrmaschine ausgeführte Hauptwerkzeugmaschine 5. Die Kernbohrmaschine 5 ist zum Schneiden von Löchern in harte Werkstoffe W, wie beispielsweise Beton, Zement, Ziegelwerk oder dergleichen ausgeführt.

Das System 1 weist hier weiterhin ein als Vorschubeinrichtung 10 bzw. Antriebseinrichtung ausgeführtes Hilfsgerät auf, mittels welcher die Kernbohrmaschine 5 mit einem Bohrständer 15 beweglich verbunden ist. Der Bohrständer 15 weist im Wesentlichen eine Fußeinrichtung 16 sowie eine als Führungsschiene 17 ausgeführte Führungseinrichtung auf. Wie in Fig. 1 gezeigt kann die Fußeinrichtung 16 waagerecht auf einen zu bearbeitenden Untergrund W befestigt werden. Alternativ hierzu kann die Fußeinrichtung 16 auch an schräg stehenden oder insbesondere senkrecht verlaufenden Untergründen angeordnet werden.

Die Befestigung der Fußeinrichtung 16 an dem Untergrund W kann dabei mittels Schrauben oder einer Verspannung erfolgen. Vorliegend weist der Bohrständer 15 im Bereich der Fußeinrichtung 16 eine Festlegungseinrichtung 18 in Form eines Unterdruckrings auf. Die Festlegungseinrichtung 18 ist beispielsweise mit einer nicht näher ersichtlichen Unterdruckeinrichtung verbunden, mittels welcher ein Ringraum der Festlegungseinrichtung 18 vakuumierbar ist, so dass der Bohrständer 15 durch den im Bereich des Ringraums vorliegenden Unterdruck sicher an dem Untergrund W gehalten ist.

Die Führungsschiene 17 erstreckt sich hier im Wesentlichen in einem 90°-Winkel zu der Fußeinrichtung 16 bzw. zu dem Untergrund W. Alternativ hierzu kann die Führungsschiene 17 auch in einem Winkel größer oder kleiner als 90° gegenüber der Fußeinrichtung 16 bzw. Untergrund W mit der Fußeinrichtung 16 verbunden sein.

Des Weiteren weist die Führungsschiene 17 an einer Seite eine Zahnstangeneinrichtung 19 auf, die sich über einen großen Teil der Länge der Führungsschiene 17 und insbesondere im Wesentlichen über die gesamte Länge der Führungsschiene 17 erstreckt.

Wie bereits vorstehend erwähnt, ist die Vorschubeinrichtung 10 zwischen der Kernbohrmaschine 5 und dem Bohrständer 15 positioniert. Mit Hilfe der Vorschubeinrichtung 10 kann die Kernbohrmaschine 5 entlang der Führungsschiene 17 des Bohrständers 15 bewegt werden. In Bezug auf das in Fig. 1 dargestellte Ausführungsbeispiel kann die Kernbohrmaschine 5 reversibel in Pfeilrichtung A oder B bewegt werden. Die Vorschubeinrichtung 10 verfügt hierzu über eine in Fig. 1 nicht dargestellte erste Befestigungseinrichtung, mit der die Kernbohrmaschine 5 an einem Gehäuse 11 der Vorschubeinrichtung 10 lösbar anbindbar ist. Darüber hinaus weist die Vorschubeinrichtung 10 noch eine zweite, in Fig. 1 ebenfalls nicht ersichtliche Befestigungseinrichtung, mit der das Gehäuse 11 der Vorschubeinrichtung 10 mit der Führungsschiene 17 des Bohrständers 15 verbindbar ist. Die zweite Befestigungseinrichtung weist hierzu eine nicht gezeigte Halteeinheit und eine ebenfalls nicht gezeigte Zahnradeinheit auf. Mit Hilfe der Halteeinheit ist die Vorschubeinrichtung 10 an der Führungsschiene 17 gehalten. Das entsprechend ausgestaltete Zahnrad greift in die Zahnstangenvorrichtung ein und führt dadurch die Vorschubeinrichtung 10 entlang der Führungsschiene 17. Um die Zahnradeinheit in eine Drehbewegung zu versetzen, besitzt die Vorschubeinrichtung 10 weiterhin einen Antrieb. Bei dem Antrieb kann es sich um einen Elektromotor samt Getriebe- bzw. Übersetzungseinheit handeln. Bei dem Elektromotor kann es sich beispielsweise um einen Universalmotor handeln. Es sind jedoch auch andere geeignete Elektromotoren möglich. Weder der Antrieb noch die Getriebe- bzw. Übersetzungseinheit sind in den Figuren dargestellt.

Die Vorschubeinrichtung 10 enthält des Weiteren eine Regel- und Steuerungseinrichtung, mit der Bewegungsparameter wie die Geschwindigkeit, Wegstrecke, Bewegungsstart- und Bewegungsendpunkt sowie andere Parameter, der Vorschubeinrichtung 10 relativ zu dem Bohrständer 15 geregelt bzw. gesteuert werden können.

Die als Kernbohrmaschine 5 ausgestaltete Hauptwerkzeugmaschine enthält im Wesentlichen ein Gehäuse 22, eine Antriebseinheit, ein Getriebe, eine Steuer- und Regeleinrichtung 9, eine Antriebswelle und eine Abtriebswelle 6. Die Steuer- und Regeleinrichtung 9 enthält einen Regler zum Regeln und Steuern des Motorstroms. Die Antriebseinheit, das Getriebe und die Antriebswelle sind in den Figuren nicht dargestellt.

An der Abtriebswelle 6 ist ein Bohrwerkzeug 7 in Gestalt einer Bohrkrone angeschlossen. Die Bohrkrone 7 weist an einem freien Ende eine Schneidekante 8 auf, mit der der zu bearbeitende Werkstoff geschnitten werden kann, um ein Bohrloch zu erzeugen. Die als Elektromotor ausgestaltete Antriebseinheit versetzt die Bohrkrone 7 hierzu in eine Drehbewegung in Richtung N. Sowohl die Bohrkrone 7 als auch die Abtriebswelle 6 drehen sich um die gemeinsame Drehachse R. Die Steuer- und Regeleinrichtung 9 dient zum Steuern bzw. Regeln der als Elektromotor ausgeführten Antriebseinheit. Hierbei wird insbesondere die Drehzahl des Elektromotors gesteuert bzw. geregelt. Darüber hinaus kann entsprechend der jeweiligen Situation des Bohrvorgangs ein bestimmter Modus eingestellt werden.

Zur Durchführung des eigentlichen Bohrvorgangs wird die Kernbohrmaschine 5 mit der daran angeschlossenen Bohrkrone 7 mittels des Bohrständers 15 an dem zu bearbeitenden Werkstoff W positioniert und befestigt.

Mit Hilfe der Steuer- und Regeleinrichtung 9 wird an dem Getriebe der Kernbohrmaschine 5 ein Gang ausgewählt und entsprechend eingelegt. Der zu wählende Gang wird anhand des Durchmessers der verwendeten Bohrkrone 7 bestimmt. Durch den gewählten Gang wird entsprechend die Drehzahl des Elektromotors festgelegt, mit der dieser drehen soll. Das Getriebe und insbesondere der gewählte Gang des Getriebes lassen die Bohrkrone 7 in einer entsprechenden Drehzahl, mit einem entsprechenden Drehmoment und einer entsprechenden Anpresskraft drehen. Bei einer alternativen Ausführung kann es auch vorgesehen sein, dass der zu wählende Gang manuell einlegbar ist. Alternativ hierzu können beispielsweise die Parameter Drehzahl, Drehmoment und Anpresskraft auch in Abhängigkeit weiterer Kriterien, wie beispielsweise einem manuell wählbaren Betriebsmodus, beispielsweise einem Economy Modus oder einem High-Performance Modus, oder in Abhängigkeit des vorliegenden Untergrunds gewählt werden.

Es kann dabei vorgesehen sein, dass ein Durchmesser der Bohrkrone 7 automatisiert erfasst und die Information beispielsweise mittels einer insbesondere drahtlosen Übertragungseinrichtung an die Kernbohrmaschine 5 übertragen wird, wodurch Parameter der Geräte des Systems 1, wie beispielsweise eine Wasserzuführmenge oder eine Anpresskraft, in Abhängigkeit des ermittelten Durchmessers der Bohrkrone 7 angepasst werden können.

Als nächstes wird ein Ein- und Ausschalter an der Kernbohrmaschine 5 betätigt. Der Ein- und Ausschalter ist Bestandteil der Steuer- und Regeleinrichtung 9 und in den Figuren nicht dargestellt. Nach dem Betätigen des Ein- und Ausschalters beginnt sich die Bohrkrone 7 in Richtung N zu drehen. Die Bohrkrone 7 und insbesondere die Schneidekante 8 der Bohrkrone 7 befinden sich zu Beginn des Bohrvorgangs noch (in Pfeilrichtung B) über dem Werkstoff W. Die Position der Bohrkrone 7 über dem Werkstoff W ist in den Figuren nicht dargestellt.

Zu Beginn des Bohrvorgangs wird die Kernbohrmaschine 5 mit der sich drehenden Bohrkrone 7 mittels der Vorschubeinrichtung 10 entlang der Führungsschiene 17 des Bohrständers 15 auf den Werkstoff W zubewegt (Pfeilrichtung A in Fig. 1).

Sobald die Schneidekante 8 der Bohrkrone 7 Kontakt mit der Oberfläche des Werkstoffs W hat, wird die Bohrkrone 7 mit einer relativ geringen Anpresskraft auf den Werkstoff W gedrückt (Pfeilrichtung A), um eine erste Führungsrinne in die Oberfläche des Werkstoffs W zu schneiden. Die Anpresskraft wird durch die Vorschubeinrichtung 10 erzeugt und mittels der Regel- und Steuerungseinrichtung der Vorschubeinrichtung 10 geregelt bzw. gesteuert. Beispielsweise beträgt die Tiefe in Pfeilrichtung A ungefähr zwischen 2 bis 5 mm. Eine relativ niedrige Anpresskraft ist dabei notwendig, da ansonsten durch den hohen Widerstand des harten Werkstoffs W die Drehzahl der Bohrkrone 7 zu stark abfällt bzw. die Bohrkrone 7 auch vollständig zum Stillstand kommen kann. Mit einer zu niedrigen Drehzahl reduziert sich entsprechend auch die Leistung der Bohrkrone 7, d.h. insbesondere die Schneideleistung der Bohrkrone 7 in dem Werkstoff W, wodurch kein genügender Bohrfortschritt mehr erreicht werden kann.

Die als Kernbohrmaschine ausgeführte Hauptwerkzeugmaschine 5 enthält des Weiteren eine Anzahl Sensoren 4, welche die Parameter der Kernbohrmaschine 5 messen. Durch die Sensoren 4 werden beispielsweise eine aktuell vorliegende Drehzahl und/oder ein aktuelles Drehmoment der Abtriebswelle 6 sowie der Bohrkrone 7 gemessen und/oder ein aktueller Gang des Getriebes ermittelt. Weiterhin ist durch einen Sensor 4 ein Zustand der Kernbohrmaschine 5 ermittelbar und feststellbar, ob die Kernbohrmaschine 5 aktiviert oder deaktiviert ist. Die von den Sensoren 4 ermittelten Messwerte werden zur Auswertung an die Steuer- und Regeleinrichtung 9 der Kernbohrmaschine 1 geleitet.

Ebenso weist die Vorschubeinrichtung 10 Sensoren 12 auf, die Parameter der Vorschubeinrichtung 10, wie beispielsweise eine Vorschubgeschwindigkeit und eine Anpresskraft, messen. Weiterhin ist durch einen Sensor 12 ein Zustand der Vorschubeinrichtung 10 ermittelbar und feststellbar, ob die Vorschubeinrichtung 10 aktiviert oder deaktiviert ist. Die Sensoren 12 übermitteln die Parameter an eine Sende- und Empfangseinrichtung 13 der Vorschubeinrichtung 10, welche Teil einer drahtlosen Übertragungseinrichtung 14 ist. Mittels der Sende- und Empfangseinrichtung 13 sind die Parameter kennzeichnende Signale an eine Sende- und Empfangseinrichtung 3 der Kernbohrmaschine 5 übermittelbar, über welche die Signale der Steuer- und Regeleinrichtung 9 zuführbar sind.

In Fig. 1 ist weiterhin ein als Wassermanagementeinrichtung 25 ausgeführtes Hilfsgerät des Systems 1 ersichtlich, welches mittels eines Schlauches 26 mit der Kernbohrmaschine 5 verbunden ist. Die Wassermanagementeinrichtung 25 versorgt die Kernbohrmaschine 5 in gewünschtem Umfang während eines Bohrvorgangs mit Wasser, wobei Wasser in einen Bohrbereich führbar ist. Die Wassermanagementeinrichtung 25 umfasst vorzugsweise sowohl einen Staub- als auch einen Wassersauger und zusätzlich eine Wasserpumpe. Die Wassermanagementeinrichtung 25 weist Sensoren 27 auf, die Parameter der Wassermanagementeinrichtung 25, wie beispielsweise einen Aktivierungszustand der Wassermanagementeinrichtung 25 und/oder einen durch den Schlauch 26 geführten Wasservolumenstrom und/oder eine Pumpleistung der Wassermanagementeinrichtung 25, messen bzw. ermitteln. Die Sensoren 27 übermitteln die Parameter an eine der Wassermanagementeinrichtung 25 zugeordnete Sende- und Empfangseinrichtung 28, welche Teil einer drahtlosen Übertragungseinrichtung 29 ist. Mittels der Sende- und Empfangseinrichtung 28 der Wassermanagementeinrichtung 25 sind die Parameter kennzeichnenden Signale an die Sende- und Empfangseinrichtung 3 der Kernbohrmaschine 5 übermittelbar, über welche die Signale der Steuer- und Regeleinrichtung 9 zuführbar sind.

Das System 1 weist zudem ein als Saugeinrichtung 35 ausgeführtes Hilfsgerät auf, welches mittels eines Schlauches 36 mit der Kernbohrmaschine 5 verbunden ist. Mittels der Saugeinrichtung 35 sind während eines Kernbohrvorgangs auftretende Abfallprodukte über den Schlauch 36 aus einem Arbeitsbereich des Bohrwerkzeugs 7 abführbar, so dass der Bohrvorgang durch diese nicht behindert wird. Die Saugeinrichtung 35 weist Sensoren 37 auf, die Parameter der Saugeinrichtung 35, wie beispielsweise einen Aktivierungszustand der Saugeinrichtung 35 und/oder eine Saugleistung der Saugeinrichtung 35 und/oder einen Füllstand der Saugeinrichtung 35, messen bzw. ermitteln. Die Sensoren 37 übermitteln die Parameter an eine der Saugeinrichtung 35 zugeordnete Sende- und Empfangseinrichtung 38, welche Teil einer drahtlosen Übertragungseinrichtung 39 ist. Mittels der Sende- und Empfangseinrichtung 38 der Saugeinrichtung 35 sind die Parameter kennzeichnenden Signale an die Sende- und Empfangseinrichtung 3 der Kernbohrmaschine 5 übermittelbar, über welche die Signale der Steuer- und Regeleinrichtung 9 zuführbar sind.

Die Kernbohrmaschine 5 weist weiterhin eine Benutzerschnittstelle 23, ein sogenanntes Man-Machine-Interface (MMI), für anwenderseitige Eingaben bzw. Steuerbefehle auf. Mittels der Benutzerschnittstelle 23 ist beispielsweise eine Größe, insbesondere ein Durchmesser, eines aktuell verwendeten Bohrwerkzeugs, beispielsweise einer Bohrkrone, eingebbar.

Die Übertragungseinrichtungen 14, 29 und 39 sind vorliegend allesamt drahtlos ausgeführt, können bei alternativen Ausführungen aber auch einzeln oder allesamt drahtgebunden ausgeführt sein. Die Übertragungseinrichtungen 14, 29 und 39 können grundsätzlich mittels beliebig auswählbarer Übertragungsprinzipien arbeiten. Beispielsweise können die Übertragungseinrichtungen 14, 29, 39 als Funkübertragungseinrichtungen ausgeführt sein. Insbesondere handelt es sich bei den Übertragungseinrichtungen 14, 29, 39 um RFID-Übertragungseinrichtungen, allerdings kann es sich alternativ hierzu beispielsweise auch um Bluetooth-Übertragungseinrichtungen, NFC-Übertragungseinrichtungen, WiFi-Übertragungseinrichtungen, QR-Übertragungseinrichtungen, DMC-Übertragungseinrichtungen, WLAN-Übertragungseinrichtungen, ZigBee-Übertragungseinrichtungen, Wibree-Übertragungseinrichtungen, WiMAX-Übertragungseinrichtungen, IrDA-Übertragungseinrichtungen oder nach optischem Richtfunk arbeitende Übertragungseinrichtungen handeln.

Mittels der Sende- und Empfangseinrichtungen 3, 13, 28 und 38 und/oder der Übertragungseinrichtungen 14, 29 und 39 ist ein Netzwerk des Systems 1 bildbar, das vorliegend sämtliche Geräte 5, 10, 25, 35 des Systems 1, nämlich die Kernbohrmaschine 5, die Vorschubeinrichtung 10, die Wassermanagementeinrichtung 25 und die Saugeinrichtung 35, umfasst.

Es ist vorliegend eine mit der Steuer- und Regeleinrichtung 9 verbundene Speichereinrichtung 21 vorgesehen, in der sowohl von den Sensoren 4, 12, 27 und 37 übermittelte Signale als auch Signale zumindest temporär speicherbar sind, die aus Eingaben über die Benutzerschnittstelle 23 generiert werden. Die in der Speichereinrichtung 21 gespeicherten Informationen können ausgelesen und ausgewertet werden.

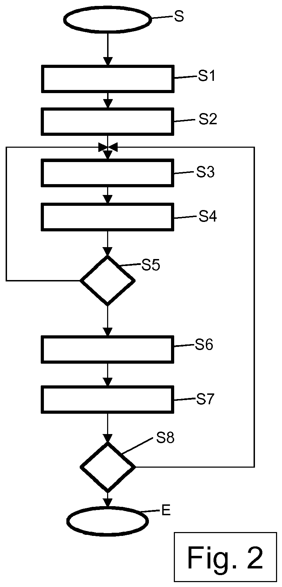

Im Folgenden wird ein Verfahren zum Betreiben des Systems 1 gemäß des in Fig. 2 dargestellten Ablaufdiagramms näher beschrieben.

Das Verfahren beginnt mit dem Start S. Im Schritt S1 wird im vorliegenden Fall die Kernbohrmaschine 5 als Master in einem die Kernbohrmaschine 5 und die Hilfsgeräte 10, 25 und 35 aufweisenden Netzwerk ausgewählt, da im gezeigten Fall die Kernbohrmaschine 5 die Steuer- und Regeleinrichtung 9 aufweist. Im vorliegend darauffolgenden Schritt S2 werden sämtliche Hilfsgeräte 10, 25, 35 des Netzwerks und somit die Vorschubeinrichtung 10, die Wassermanagementeinrichtung 25 und die Saugeinrichtung 35 als Slave in dem Netzwerk ausgewählt.

Alternativ hierzu kann es auch vorgesehen sein, dass ein Hilfsgerät 10, 25 oder 35 die Steuer- und Regeleinrichtung aufweist. In diesem Fall kann dieses Hilfsgerät 10, 25, 35 im Schritt S1 als Master und die anderen Hilfsgeräte 10, 25, 35 und die Kernbohrmaschine 5 in Schritt S2 als Slave in dem Netzwerk ausgewählt werden.

Darauffolgend wird im Schritt S3 wenigstens ein Signal eines Geräts 5, 10, 25, 35 mittels jeweiligen Sende- und Empfangseinrichtung 3, 13, 28, 38 an die Steuer- und Regeleinrichtung 9 übermittelt, welches wenigstens einen Parameter des jeweiligen Geräts 5, 10, 25, 35 repräsentiert. Im Schritt S4 werden die jeweiligen Parameter in der Steuer- und Regeleinrichtung 9 hinterlegt.

Im sich hieran anschließenden Abfrageschritt S5 wird beispielsweise abgefragt, ob innerhalb einer zu definierenden Zeitspanne weitere Signale desselben oder eines anderen Geräts 5, 10, 25, 35 vorliegen. Bei positivem Abfrageergebnis wird mit Schritt S3 fortgefahren und das jeweilige Signal eines Geräts 5, 10, 25, 35 ebenfalls an die Steuer- und Regeleinrichtung 9 übermittelt, in Schritt S4 in der Steuer- und Regeleinrichtung 9 hinterlegt und mit den bereits in der Steuer- und Regeleinrichtung 9 hinterlegten Parametern zu einem Parametersatz zusammengeführt. Dies wird solange fortgesetzt, bis alle erforderlichen Parameter in der Steuer- und Regeleinrichtung 9 hinterlegt sind oder keine weiteren Signale vorliegen.

Nach Ablauf der Zeitspanne und/oder, wenn keine weiteren Signale vorliegen wird das Verfahren im Schritt S6 mit der Auswertung des in der Steuer- und Regeleinrichtung 9 hinterlegten Parametersatzes fortgesetzt. Hierbei kann der aktuell vorliegende Parametersatz mit in der Steuer- und Regeleinrichtung 9 beispielsweise in Form einer Look-up-Tabelle hinterlegten Parametersätzen und/oder mittels wenigstens eines in der Steuer- und Regeleinrichtung 9 hinterlegten Algorithmus ausgewertet werden.

Im darauffolgenden Schritt S7 wird anhand der Auswertung des Parametersatzes wenigstens ein Parameter wenigstens eines Geräts 5, 10, 25, 35 des Systems eingestellt. Hierbei wird von der Steuer- und Regeleinrichtung 9 mittels der Sende- und Empfangseinrichtung 3 ein Signal an die Sende- und Empfangseinrichtung 13, 28, 38 des jeweiligen Geräts 10, 25, 35 gesendet und nach einem Empfang des Signals von der Sende- und Empfangseinrichtung 13, 28, 38 des jeweiligen Geräts 10, 25, 35 in Abhängigkeit des Signals der jeweilige Parameter eingestellt. Es kann dabei auch vorgesehen sein, dass in Schritt S7 Parameter von verschiedenen Geräten 5, 10, 25, 35 eingestellt werden.

Nach Schritt S7 wird das Verfahren in Schritt S10 mit der Abfrage fortgesetzt, ob weitere Signale von Geräten 5, 10, 25, 35 vorliegen. Bei positivem Abfrageergebnis wird das Verfahren mit Schritt S3 fortgesetzt. Bei negativem Abfrageergebnis wird das Verfahren mit Schritt E beendet.

Das mit dem beschriebenen Verfahren betriebene System 1 weist eine verbesserte Performance auf, die durch eine Wechselwirkung der Geräte 5, 10, 25, 35 untereinander erzielt ist. Das verbesserte Zusammenwirken der Geräte 5, 10, 25 ,35 des Systems 1 wird dadurch einreicht, dass einzelne oder alle Geräte 5, 10, 25, 35 des Systems 1 in Abhängigkeit von Parametern eines Geräts 5, 10, 25, 35 oder aller Geräte 5, 10, 25, 35 angesteuert bzw. betrieben werden.

Bei einer Ausführungsform des Verfahrens nach der Erfindung kann es beispielsweise vorgesehen sein, dass eine Wasserpumpe der Wassermanagementeinrichtung 25 von der Steuer- und Regeleinrichtung 9 angeschaltet wird, wenn sich die Abtriebswelle 6 der Kernbohrmaschine 5 mit einer Drehzahl größer Null dreht. Dabei stellt ein Aktivierungszustand der Wassermanagementeinrichtung 25 einen Parameter dar, der als Signal von der Sende- und Empfangseinrichtung 28 der Wassermanagementeinrichtung 25 an die Sende- und Empfangseinrichtung 3 der Kernbohrmaschine 5 übermittelt und anschließend in der Steuer- und Regeleinrichtung 9 hinterlegt wird. Weiterhin stellt die Drehzahl der Kernbohrmaschine 5 einen Parameter dar, der ebenfalls in der Steuer- und Regeleinrichtung 9 hinterlegt wird. In der Steuer- und Regeleinrichtung 9 ist beispielsweise ein Algorithmus hinterlegt, der eine Aktivierung der Wassermanagementeinrichtung 25 einstellt, wenn eine Drehzahl der Kernbohrmaschine 5 größer Null ist.

In vergleichbarer Weise können folgende beispielsweise aufgeführte Anwendungsfälle bei einer Ausführungsform eines erfindungsgemäßen Verfahrens durchgeführt werden.

Es kann vorgesehen sein, dass die Saugeinrichtung 35 aktiviert wird, wenn eine in dem Bohrloch befindliche Wassermenge einen definierten Grenzwert überschritten hat. Dies kann beispielsweise über einen Durchfluss der Wassermanagementeinrichtung 25 ermittelt werden.

In einem weiteren Anwendungsfall kann es vorgesehen sein, dass ein Wasservolumenstrom der Wassermanagementeinrichtung 25 abhängig von einem aktuell eingelegten Gang der Kernbohrmaschine 5, insbesondere in Kombination mit einem Aktivierungszustand der Kernbohrmaschine 5, ist. Beispielsweise kann in der Steuer- und Regeleinrichtung 9 ein Algorithmus hinterlegt sein, der jedem Gang der Kernbohrmaschine 5 einen bestimmten Wasservolumenstrom der Wassermanagementeinrichtung 25 zuordnet. Ein Wasservolumenstrom wird somit jeweils an die aktuell vorliegenden Anforderungen des Bohrvorgangsangepasst. Der Algorithmus hat vorzugsweise als Basis insbesondere Motorinformationen, wie beispielsweise eine Drehzahl, ein Drehmoment, und dergleichen, Informationen von der Vorschubeinrichtung 10 wie beispielsweise eine Vorschubgeschwindigkeit, ein Material, ein Untergrundmaterial wie Eisen oder Beton, oder dergleichen und aus einer Bohrkonenerkennung.

Es kann auch vorgesehen sein, dass die Saugeinrichtung 35 deaktiviert wird, wenn ein Druck einen definierten Schwellwert unterschreitet. Zudem kann es vorgesehen sein, dass die Kernbohrmaschine 5 deaktiviert wird, wenn ein Absaugvolumen der Saugeinrichtung 35 einen definierten Füllstand überschreitet.

Auch kann es vorgesehen sein, dass in Abhängigkeit eines aktuell verwendeten Bohrwerkzeugs 7, beispielsweise eines manuell über die Benutzerschnittstelle 23 eingebbaren Durchmessers einer Bohrkrone 7, Parameter der Hilfsgeräte 5, 10, 25, 35, wie beispielsweise eine von der Vorschubeinrichtung 10 einstellbare Anpresskraft, eine Drehgeschwindigkeit des Bohrwerkzeugs 7, ein Wasservolumenstrom der Wassermanagementeinrichtung 25 und eine Saugleistung der Saugeinrichtung 35 eingestellt werden.

### Bezugszeichenliste

- 1: System
- 3: Sende- und Empfangseinrichtung
- 4: Sensor
- 5: Hauptwerkzeugmaschine; Kernbohrmaschine
- 6: Abtriebswelle
- 7: Bohrwerkzeug
- 8: Schneidekante
- 9: Steuer- und Regeleinrichtung
- 10: Hilfsgerät; Vorschubeinrichtung
- 11: Gehäuse
- 12: Sensor
- 13: Sende- und Empfangseinrichtung
- 14: Übertragungseinrichtung
- 15: Bohrständer
- 16: Fußeinrichtung
- 17: Führungsschiene
- 18: Festlegungseinrichtung
- 19: Zahnstangeneinrichtung
- 21: Speichereinrichtung
- 22: Gehäuse
- 23: Benutzerschnittstelle
- 25: Hilfsgerät; Wassermanagementeinrichtung
- 26: Schlauch
- 27: Sensor
- 28: Sende- und Empfangseinrichtung
- 29: Übertragungseinrichtung
- 35: Hilfsgerät; Saugeinrichtung
- 36: Schlauch
- 37: Sensor
- 38: Sende- und Empfangseinrichtung
- 39: Übertragungseinrichtung
- A, B: Bewegungsrichtung
- E: Ende
- N: Drehrichtung
- R: Drehachse
- S: Start
- S1 bis S8: Schritt
- W: Untergrund

## Patentansprüche

1. Verfahren zum Betreiben eines mehrere Geräte (5, 10, 25, 35) umfassenden Systems (1), wobei ein Gerät (5) eine Hauptwerkzeugmaschine und wenigstens ein weiteres Gerät (10, 25, 35) ein Hilfsgerät ist und die Hauptwerkzeugmaschine (5) und das wenigstens eine Hilfsgerät (10, 25, 35) jeweils mit einer Sende- und Empfangseinrichtung (3, 13, 28, 38) und wenigstens einem Sensor (4, 12, 27, 37) ausgeführt sind, und wobei eine Steuereinrichtung (9) vorgesehen ist,
**dadurch gekennzeichnet, dass** das Verfahren folgende Schritte umfasst:
- Übermittlung eines ersten, wenigstens einen Parameter eines Geräts (5, 10, 25, 35) des Systems (1) repräsentierenden Signals mittels der Sende- und Empfangseinrichtung (3, 13, 28, 38) von einem Gerät (5, 10, 25, 35) an die Steuereinrichtung (9) (S3);
- Übermittlung eines zweiten, wenigstens einen Parameter eines weiteren Geräts (5, 10, 25, 35) des Systems (1) repräsentierenden Signals mittels der Sende- und Empfangseinrichtung (3, 13, 28, 38) von dem weiteren Gerät (5, 10, 25, 35) an die Steuereinrichtung (9) (S3);
- Zusammenführung der Parameter in einem Parametersatz in der Steuereinrichtung (9) (S4);
- Auswerten des aktuell vorliegenden Parametersatzes mittels in der Steuereinrichtung (9) hinterlegten Parametersätzen (S6) und/oder
- Auswerten des aktuell vorliegenden Parametersatzes mittels wenigstens eines in der Steuereinrichtung (9) hinterlegten Algorithmus (S6); und
- Einstellen wenigstens eines Parameters wenigstens eines Geräts (5, 10, 25, 35) des Systems (1) in Abhängigkeit der Auswertung des aktuell vorliegenden Parametersatzes.

2. Verfahren nach Anspruch 1,
**gekennzeichnet durch** die Übermittlung wenigstens eines weiteren, wenigstens einen Parameter wenigstens eines zusätzlichen Geräts (5, 10, 25, 35) des Systems (1) repräsentierenden Signals von dem zusätzlichen Gerät (5, 10, 25, 35) an die Steuereinrichtung (9).

3. Verfahren nach einem der Ansprüche 1 oder 2,
**dadurch gekennzeichnet, dass** die durch Signale übermittelte Parameter des jeweiligen Geräts (5, 10, 25, 35) durch Sensoren (4, 12, 27, 37) ermittelt werden.

4. Verfahren nach einem der Ansprüche 1 bis 3,
**dadurch gekennzeichnet, dass** die durch die Signale übermittelten Parameter des jeweiligen Geräts (5, 10, 25, 35) manuell vorgebbar sind.

5. Verfahren nach einem der Ansprüche 1 bis 4,
**dadurch gekennzeichnet, dass** ein von einem Gerät (5, 10, 25, 35) an die Steuereinrichtung (9) übermitteltes Signal zur Einstellung eines Parameters wenigstens eines anderen Geräts (5, 10, 25, 35) durch die Steuereinrichtung (9) führt.

6. Verfahren nach einem der Ansprüche 1 bis 5,
**dadurch gekennzeichnet, dass** ein von einem Gerät (5, 10, 25, 35) an die Steuereinrichtung (9) übermitteltes Signal zur Einstellung eines Parameters dieses Geräts (5, 10, 25,35) durch die Steuereinrichtung (9) führt.

7. Verfahren nach einem der Ansprüche 1 bis 6,
**gekennzeichnet durch**
- Auswählen das die Steuereinrichtung (9) aufweisenden Geräts (5, 10, 25, 35) des Systems (1) als Master in einem die Hauptwerkzeugmaschine (5) und das wenigstens eine Hilfsgerät (10, 25,35) umfassenden Netzwerks; und
- Auswählen der weiteren Geräte (10, 25, 35) als Slave in dem Netzwerk.

8. Verfahren nach einem der Ansprüche 1 bis 7,
**dadurch gekennzeichnet, dass** wenigstens ein an die Steuereinrichtung (9) übermitteltes Signal in einer Speichereinrichtung (21) gespeichert wird.

9. System zur Durchführung des Verfahrens gemäß einem der Ansprüche 1 bis 8, mit mehreren Geräten (5, 10, 25, 35), wobei ein Gerät (5) eine Hauptwerkzeugmaschine und wenigstens ein weiteres Gerät (10, 25,35) ein Hilfsgerät ist und die Hauptwerkzeugmaschine (5) und das wenigstens eine Hilfsgerät (10, 25,35) jeweils mit einer Sende- und Empfangseinrichtung (3, 13, 28, 38) und wenigstens einem Sensor (4, 12, 27, 37) ausgeführt sind, und wobei eine Steuereinrichtung (9) vorgesehen ist.

10. System nach Anspruch 9,
**dadurch gekennzeichnet, dass** die Hauptwerkzeugmaschine (5) die Steuereinrichtung (9) aufweist.

11. System nach Anspruch 9,
**dadurch gekennzeichnet, dass** ein Hilfsgerät (10, 25, 35) die Steuereinrichtung aufweist.

12. System nach einem der Ansprüche 9 bis 11,
**dadurch gekennzeichnet, dass** die Sende- und Empfangseinrichtungen (3, 13, 28, 38) der Hauptwerkzeugmaschine (5) und des wenigstens einen Hilfsgeräts (10, 25, 35) Teil einer drahtlosen oder drahtgebundenen Übertragungseinrichtung (14, 29, 39) sind.

13. System nach Anspruch 12,
**dadurch gekennzeichnet, dass** die drahtlose Übertragungseinrichtung (14, 29, 39) eine optische Übertragungseinrichtung oder eine Funkübertragungseinrichtung ist und insbesondere als RFID-Übertragungseinrichtung, als Bluetooth-Übertragungseinrichtung, als Bluethooth-Low-Energy-Übertragungseinrichtung, als NFC-Übertragungseinrichtung, als WiFi-Übertragungseinrichtung, als QR-Übertragungseinrichtung, als DMC-Übertragungseinrichtung, als WLAN-Übertragungseinrichtung, als ZigBee-Übertragungseinrichtung, als Wibree-Übertragungseinrichtung, WiMAX-Übertragungseinrichtung, als LoRa-Übertragungseinrichtung, als IrDA-Übertragungseinrichtung oder als nach optischem Richtfunk arbeitende Übertragungseinrichtung ausgeführt ist.

14. System nach einem der Ansprüche 9 bis 13,
**dadurch gekennzeichnet, dass** die Hauptwerkzeugmaschine (5) eine Kernbohrwerkzeugmaschine oder eine Wandsägemaschine ist.

15. System nach einem der Ansprüche 9 bis 14,
**dadurch gekennzeichnet, dass** ein Hilfsgerät (10, 25, 35) eine Vorschubeinrichtung für die Hauptwerkzeugmaschine, eine Unterdruckpumpe, eine Saugeinrichtung oder eine Wassermanagementeinrichtung ist.
